# FASCICULE DE BREVET EUROPEEN

(11) **EP 2 377 276 B1**
(45) Date de publication et mention de la délivrance du brevet: **17.10.2012**
(21) Numéro de dépôt: 09805773.0
(22) Date de dépôt: 21.12.2009
(51) Int. Cl.: H04L 12/40, G06F 1/32

(54) **PROCEDE ET DISPOSITIF DE CONTROLE DU REVEIL D'ORGANES APPARTENANT A AU MOINS UN RESEAU MULTIPLEXE, PAR COMPTAGE DE REVEILS INTEMPESTIFS**
VERFAHREN UND VORRICHTUNG ZUR STEUERUNG DES AUFWACHENS VON ZU MINDESTENS EINEM MULTIPLEXIERTEN NETZWERK GEHÖRENDEN EINRICHTUNGEN DURCH ZÄHLEN VON UNBEABSICHTIGTEN AUFWECKUNGEN
METHOD AND DEVICE FOR CONTROLLING THE AWAKING OF FACILITIES BELONGING TO AT LEAST ONE MULTIPLEXED NETWORK, BY COUNTING UNTIMELY WAKE-UPS

(30) Priorité: 15.01.2009 FR 0950207
(43) Date de publication de la demande: 19.10.2011
(73) Titulaire: PEUGEOT CITROËN AUTOMOBILES S.A., 78140 Vélizy Villacoublay (FR)
(72) Inventeur: MEREY-MARZAT, Matthieu, F-91310 Linas (FR); BOISSERIE, Antony, F-91320 Wissous (FR); SOLLIER, Vincent, F-92120 Montrouge (FR)
(74) Mandataire: Vigand, Régis Louis Michel
(86) Numéro de dépôt international: PCT/FR2009/052650
(87) Numéro de publication internationale: WO 2010/081954

(56) Documents cités:
- WO-A-01/42054
- DE-A1- 10 358 584
- DE-B3- 10 246 337

## Description

L'invention concerne les ensembles de réseau(x) de communication multiplexé(s) comme par exemple ceux appelés réseaux d'interconnexion locale (ou LIN (pour « Local Interconnect Network »)) ou ceux de type CAN (« Controller Area Network ») ou encore ceux de type FlexRay, lesquels sont notamment utilisés dans certains véhicules automobiles.

On entend ici par « ensemble de réseau(x) multiplexé(s) » un groupe d'au moins un réseau de communication multiplexé comprenant au moins un organe (appelé organe esclave dans le cas d'un réseau LIN) connecté à un bus auquel est également connecté un organe de gestion (appelé organe (ou noeud) maître dans le cas d'un réseau LIN). L'organe de gestion est notamment chargé de gérer les mises en veille et les réveils des organes de l'ensemble de réseau(x) multiplexé(s).

Lorsque les organes (ou noeuds) d'un ensemble de réseau(x) multiplexé(s) sont placés dans un état de veille (à la demande de l'organe de gestion), ils se réveillent automatiquement lorsqu'ils détectent une activité sur leur bus. Cette activité provient normalement d'un organe, éventuellement de gestion, qui requiert le réveil des autres organes, mais elle peut également résulter de la présence de parasites. On considère en effet qu'il existe une activité sur un bus lorsque l'on peut détecter une transition dite « récessif-dominant » suivie d'un état dominant pendant une durée supérieure à un seuil (plusieurs dizaines de µs dans le cas d'un réseau CAN). L'état dominant (ou « logical low ») est le niveau électrique du réseau correspondant à un « 0 » logique. Inversement, l'état récessif (ou « logical high ») est le niveau électrique du réseau correspondant à un « 1 » logique. Le niveau logique « 0 » est appelé niveau dominant car il est prioritaire lorsque plusieurs organes veulent imposer des niveaux différents. Par conséquent, tout phénomène volontaire ou involontaire entraînant une transition récessif-dominant suivie d'un état dominant pendant une durée supérieure à un seuil est considéré par un organe comme une activité devant entraîner son réveil.

Lorsque l'organe de gestion détecte une activité sur un bus, il doit immédiatement déterminer si un organe est effectivement à l'origine de cette activité. Si l'organe de gestion obtient d'un organe activateur une confirmation de réveil, alors il autorise les organes à rester réveillés. Dans le cas contraire (parasites), l'organe de gestion doit ordonner aux organes qu'il gère de se remettre dans leur état de veille. On comprendra alors que si les parasites proviennent d'un organe défectueux d'un réseau multiplexé d'un ensemble, les organes du réseau multiplexé de l'ensemble peuvent faire l'objet d'une alternance de phases de mise en veille et de réveil qui va entraîner une surconsommation électrique du réseau qui peut provoquer une décharge de la batterie (dans le cas d'une implantation dans un véhicule automobile), laquelle peut être accélérée dans le cas d'une propagation des réveils à d'autres réseaux multiplexés de l'ensemble.

Le document WO01/42054 décrit un circuit pour activer, via un réseau CAN, une unité de contrôle tel qu'un contrôleur ABS d'un véhicule.

Le document DE10246337 décrit un système de supervision d'un réseau CAN. Le réseau peut entrer dans un mode de semi veille dans lequel peu de messages transitent sur le réseau.

Le document DE10358584 décrit un dispositif pour réveiller les membres d'un réseau comportant des moyens de détection comptant des intervalles de temps entre signaux et déclenchant un processus particulier de veille.

L'invention a donc pour but d'améliorer la situation.

Elle propose à cet effet un procédé, dédié au contrôle du réveil d'organes d'un ensemble d'au moins un réseau de communication multiplexé géré par un organe de gestion, et consistant, en cas de détection par l'organe de gestion d'un réveil des organes d'un réseau multiplexé de l'ensemble, à déterminer la valeur en cours d'un compteur, et si cette valeur en cours est supérieure ou égale à un seuil choisi à ne pas demander la confirmation du réveil et à ordonner le maintien en veille des organes de l'ensemble de réseau(x) multiplexé(s), tandis que si cette valeur en cours est inférieure au seuil choisi soit à incrémenter d'une unité la valeur en cours et à ordonner le maintien en veille des organes de l'ensemble de réseau(x) multiplexé(s) si le réveil n'est pas confirmé, soit à mettre à zéro la valeur en cours et à autoriser le réveil des organes de l'ensemble de réseau(x) multiplexé(s) si le réveil est confirmé.

Par ailleurs, en cas de réception par l'organe de gestion d'une demande locale de réveil, on peut mettre à zéro la valeur en cours du compteur et autoriser le réveil des organes de l'ensemble de réseau(x) multiplexé(s), car une demande de réveil locale de l'organe de gestion doit toujours être autorisée.

L'invention propose également un dispositif de contrôle, destiné à faire partie d'un (ou à être couplé à un) organe de gestion chargé de gérer un ensemble d'au moins un réseau de communication multiplexé comprenant au moins un organe, et agencé, en cas de détection par l'organe de gestion d'un réveil des organes d'un réseau multiplexé de l'ensemble, pour déterminer la valeur en cours d'un compteur, et si cette valeur en cours est supérieure ou égale à un seuil choisi pour ordonner le maintien en veille des organes de l'ensemble de réseau(x) multiplexé(s), tandis que si cette valeur en cours est inférieure au seuil choisi soit pour incrémenter d'une unité la valeur en cours et ordonner le maintien en veille des organes de l'ensemble de réseau(x) multiplexé(s) si le réveil n'est pas confirmé, soit pour mettre à zéro la valeur en cours et autoriser le réveil des organes de l'ensemble de réseau(x) multiplexé(s) si le réveil est confirmé.

Ce dispositif peut être également agencé, en cas de réception par l'organe de gestion d'une demande locale de réveil, pour mettre à zéro la valeur en cours du compteur et autoriser le réveil des organes de l'ensemble de réseau(x) multiplexé(s).

L'invention propose également un organe de gestion chargé de gérer un ensemble de réseau(x) multiplexé(s) et équipé d'un dispositif de contrôle du type de celui présenté ci-avant.

L'invention est particulièrement bien adaptée, bien que non limitativement, au cas où l'organe de gestion est commun à plusieurs réseaux de communication multiplexés. En effet l'invention permet de confiner à un unique réseau multiplexé d'un ensemble les demandes de réveils parasites et de ne pas réveiller tous les autres réseaux multiplexés de cet ensemble.

Par ailleurs, l'invention est particulièrement bien adaptée, bien que non limitativement, aux réseaux multiplexés choisis parmi les réseaux d'interconnexion locale (ou LIN (pour Local Interconnect Network)), les réseaux de type CAN (Controller Area Network) et les réseaux de type FlexRay.

D'autres caractéristiques et avantages de l'invention apparaîtront à l'examen de la description détaillée ci-après, et des dessins annexés, sur lesquels :
- la figure 1 illustre schématiquement un ensemble de deux réseaux multiplexés, par exemple de type CAN ou LIN, gérés par un organe de gestion équipé d'un dispositif de contrôle selon l'invention, et
- la figure 2 illustre schématiquement un exemple d'algorithme permettant de mettre en oeuvre un procédé de contrôle selon l'invention.

Les dessins annexés pourront non seulement servir à compléter l'invention, mais aussi contribuer à sa définition, le cas échéant.

L'invention a pour but d'offrir un procédé et un dispositif associé permettant de contrôler le réveil d'organes appartenant à un ensemble de réseau(x) de communication multiplexé(s).

Dans ce qui suit, on considère, à titre d'exemple non limitatif, que l'ensemble de réseau(x) (de communication) multiplexé(s) est embarqué dans un véhicule automobile, comme par exemple une voiture. Mais, l'invention n'est pas limitée à cette application. Elle concerne en effet tous les ensembles de réseau(x) multiplexé(s), et notamment ceux comportant au moins un réseau de type CAN ou de type LIN ou encore de type FlexRay, par exemple.

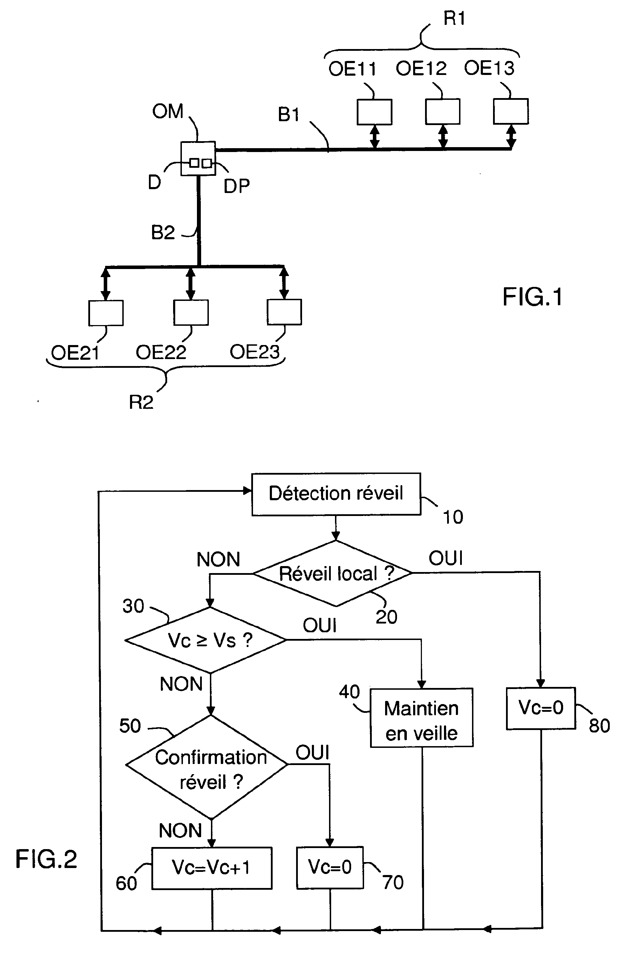

On a schématiquement représenté sur la figure 1 un exemple non limitatif d'ensemble de deux réseaux (de communication) multiplexés R1 et R2 (i = 1 ou 2) connectés à un organe (ou noeud) de gestion (ou organe maître) OM. Le premier réseau multiplexé R1 comprend un bus B1 (i = 1) connecté à l'organe de gestion OM et auquel sont connectés trois organes (ou noeuds esclaves) OE11 à OE13 (i = 1, j = 1 à 3). Le deuxième réseau multiplexé R2 comprend un bus B2 (i = 2) connecté à l'organe de gestion OM et auquel sont connectés trois organes (ou noeuds esclaves) OE21 à OE23 (i =2,j=1 à3).

On notera, d'une part, que l'ensemble concerné par l'invention peut ne comporter qu'un seul réseau multiplexé ou bien plus de deux réseaux multiplexés, et, d'autre part, qu'un réseau multiplexé d'un ensemble selon l'invention peut ne comporter qu'un seul organe (ou noeud) ou bien plus d'un organe (ou noeud).

L'organe (ou noeud) de gestion OM et les organes (ou noeuds esclaves) OEij peuvent être de tout type. Par exemple, dans le cas d'une voiture il peut s'agir d'éléments, d'équipements ou d'organes du système de climatisation ou du système de contrôle des translations des vitres ou encore du système de verrouillage des portes.

Le procédé de contrôle du réveil d'organes OEij, selon l'invention, est mis en oeuvre au niveau de l'organe de gestion OM au moyen d'un dispositif de contrôle D. Comme illustré non limitativement, ce dispositif D peut faire partie intégrante de l'organe de gestion OM. Mais, dans une variante, il pourrait n'être que couplé à l'organe de gestion OM. De ce fait, un dispositif D peut être réalisé sous la forme de modules logiciels (ou informatiques), ou de circuits électroniques, ou encore d'une combinaison de circuits électroniques et de modules logiciels. On notera que le dispositif de contrôle D peut être considéré comme un automate.

On se réfère maintenant à l'algorithme de la figure 2 pour présenter en détail le procédé selon l'invention. Ce dernier est effectué chaque fois que l'organe de gestion OM détecte un réveil des organes OEij d'un réseau multiplexé (par exemple R2) de l'ensemble (de réseau(x) multiplexé(s)). On notera qu'un organe de gestion OM dispose d'un dispositif (ou automate) principal DP chargé de gérer les différentes phases de vie (veilles et réveils) des organes OEij de chaque réseau multiplexé Ri. C'est donc ce dispositif (ou automate) principal DP qui alerte le dispositif de contrôle D lorsqu'il a détecté un réveil sur le bus (par exemple B2).

On notera que le dispositif de contrôle D peut éventuellement faire partie du dispositif principal DP.

Lorsque le dispositif de contrôle D est alerté d'une détection de réveil lors d'une étape 10, il détermine dans une étape 30 la valeur en cours Vc d'un compteur.

On notera que, comme illustré, il est préférable que le dispositif de contrôle D effectue dans une étape intermédiaire 20, située entre les étapes 10 et 30, un test destiné à déterminer si le réveil détecté provient d'un organe OEij d'un réseau multiplexé Ri (on parle alors de réveil réseau) ou de l'organe de gestion OM (on parle alors de réveil local provoqué par un événement applicatif ou par un événement détecté sur une entrée directe de l'organe de gestion OM).

Si le test de l'étape 20 indique que le réveil provient d'un réseau multiplexé Ri (ici R2), le dispositif de contrôle D effectue à l'étape 30 une comparaison entre la valeur en cours Vc et un seuil choisi Vs. Ce seuil Vs est par exemple égal à 5. Il est représentatif du nombre maximal de réveils réseau successifs intempestifs (ou non justifiés) que l'on tolère avant de procéder à l'interdiction des réveils réseau issus du réseau multiplexé Ri (ici R2).

Si la valeur en cours Vc est supérieure ou égale au seuil choisi Vs (Vc ≥ Vs), alors le dispositif de contrôle D ne demande pas la confirmation du réveil et ordonne le maintien en veille de tous les organes OEij des réseaux multiplexés Ri de l'ensemble. Cela est destiné à limiter toute activité une fois que le seuil a été atteint.

A la fin de cette étape 40, le procédé selon l'invention prend fin. Le dispositif de contrôle D peut alors recevoir un éventuel nouvel avertissement de détection de réveil au cours d'une nouvelle étape 10.

Si la valeur en cours Vc est inférieure au seuil choisi Vs (Vc < Vs), alors le dispositif effectue dans une étape 50 un test destiné à déterminer si le réveil réseau détecté est (a été) confirmé. Pour ce faire, il interroge le dispositif principal DP qui dans l'intervalle à lui-même classiquement effectué cette détermination, par exemple en vérifiant le message de demande de réveil de l'organe activateur OEij.

Si le réveil réseau n'est pas confirmé, le dispositif de contrôle D en est averti par le dispositif principal DP, et dans une étape 60 il incrémente d'une unité la valeur en cours Vc du compteur (Vc = Vc + 1). Puis, il ordonne le maintien en veille des organes OEij (i=2 et j=1 à 3) du (second) réseau multiplexé R2. En fait, il peut soit avertir le dispositif (ou automate) principal DP du fait que le réveil est autorisé (car le seuil Vs n'a pas encore été atteint) et donc qu'il n'a rien à faire, soit ne pas intervenir auprès du dispositif principal DP, ce qui revient à l'avertir qu'il n'a rien à faire.

A la fin de cette étape 60, le procédé selon l'invention prend fin. Le dispositif de contrôle D peut alors recevoir un éventuel nouvel avertissement de détection de réveil au cours d'une nouvelle étape 10.

Si le réveil réseau est confirmé, le dispositif de contrôle D en est averti par le dispositif principal DP. Le réveil ayant été justifié par celui qui l'a déclenché, le dispositif de contrôle D n'a pas de raison de l'interdire. Il effectue alors une étape 70 dans laquelle il met à zéro (0) la valeur en cours Vc du compteur (Vc = 0), ce qui autorise à nouveau le réveil des organes du (second) réseau multiplexé Ri (ici R2). En fait, il peut soit avertir le dispositif (ou automate) principal DP du fait que le réveil est autorisé (car la valeur en cours Vc est maintenant nulle) et donc qu'il n'a rien à faire, soit ne pas intervenir auprès du dispositif principal DP, ce qui revient à l'avertir qu'il n'a rien à faire. On comprendra que cette remise à zéro de la valeur Vc du compteur est destinée à permettre de nouveau les réveils réseau si ces derniers étaient précédemment interdits du fait d'un dépassement du seuil Vs par la dernière valeur en cours Vc.

A la fin de cette étape 70, le procédé selon l'invention prend fin. Le dispositif de contrôle D peut alors recevoir un éventuel nouvel avertissement de détection de réveil au cours d'une nouvelle étape 10.

Si le test de l'étape 20 indique que le réveil est local (et donc qu'il ne provient pas d'un organe autre que l'organe de gestion OM des réseaux multiplexés Ri), alors dans une étape 80 le dispositif de contrôle D met à zéro la valeur en cours Vc du compteur et autorise le réveil des organes des réseaux multiplexés Ri (R1 à R2). En fait, il peut soit avertir le dispositif (ou automate) principal DP du fait que le réveil est autorisé (car la valeur en cours Vc est maintenant nulle) et donc qu'il n'a rien à faire, soit ne pas intervenir auprès du dispositif principal DP, ce qui revient à l'avertir qu'il n'a rien à faire. On comprendra que cette remise à zéro de la valeur Vc du compteur est destinée à permettre de nouveau les réveils réseau si ces derniers étaient précédemment interdits du fait d'un dépassement du seuil par la dernière valeur en cours Vc.

A la fin de cette étape 80, le procédé selon l'invention prend fin. Le dispositif de contrôle D peut alors recevoir un éventuel nouvel avertissement de détection de réveil au cours d'une nouvelle étape 10.

Grâce à l'invention, un défaut de fonctionnement d'un organe, se traduisant par des réveils successifs intempestifs (ou non justifiés), peut être confiné dans le réseau multiplexé qui comprend cet organe défectueux; dès que le nombre de réveils réseau successifs non confirmés (ou non justifiés) dépasse une valeur seuil. Les autres réseaux multiplexés de l'ensemble de réseaux multiplexés ne sont donc plus réveillés inutilement et la consommation électrique de cet ensemble peut être limitée à celle du réseau multiplexé comportant l'organe défectueux.

L'invention ne se limite pas aux modes de réalisation de procédé de contrôle, de dispositif de contrôle et d'organe de gestion décrits ci-avant, seulement à titre d'exemple, mais elle englobe toutes les variantes que pourra envisager l'homme de l'art dans le cadre des revendications ci-après.

## Revendications

1. Procédé de contrôle du réveil d'organes (OEij) d'un ensemble d'au moins un réseau de communication multiplexé (Ri) géré par un organe de gestion (OM), **caractérisé en ce qu'**il consiste, en cas de détection par ledit organe de gestion (OM) d'un réveil des organes (OEij) d'un réseau multiplexé (Ri) de l'ensemble, à déterminer la valeur en cours d'un compteur, et si cette valeur en cours est supérieure ou égale à un seuil choisi à ne pas demander la confirmation dudit réveil et à ordonner un maintien en veille des organes (OEij) de l'ensemble de réseau(x) multiplexé(s), tandis que si cette valeur en cours est inférieure audit seuil choisi soit à incrémenter d'une unité ladite valeur en cours et à ordonner le maintien en veille des organes (OEij) de l'ensemble de réseau(x) multiplexé(s) si ledit réveil n'est pas confirmé, soit à mettre à zéro ladite valeur en cours et à autoriser le réveil des organes de l'ensemble de réseau(x) multiplexé(s) si ledit réveil est confirmé.

2. Procédé selon la revendication 1, **caractérisé en ce qu'**en cas de réception par ledit organe de gestion (OM) d'une demande locale de réveil, on met à zéro ladite valeur en cours du compteur et on autorise le réveil des organes de l'ensemble de réseau(x) multiplexé(s).

3. Procédé selon l'une des revendications 1 ou 2, **caractérisé en ce que** l'ensemble d'au moins un réseau multiplexé (Ri) est choisi parmi un réseau de type CAN, un réseau d'interconnexion locale (LIN), et un réseau de type FlexRay.

4. Dispositif (D) de contrôle du réveil d'organes (OEij) d'un ensemble d'au moins un réseau de communication multiplexé (Ri) géré par un organe de gestion (OM), **caractérisé en ce qu'**il est agencé, en cas de détection par ledit organe de gestion (OM) d'un réveil des organes (OEij) d'un réseau multiplexé (Ri) de l'ensemble, pour déterminer la valeur en cours d'un compteur, et si cette valeur en cours est supérieure ou égale à un seuil choisi pour ordonner un maintien en veille des organes (OEij) de l'ensemble de réseau(x) multiplexé(s), tandis que si cette valeur en cours est inférieure audit seuil choisi soit pour incrémenter d'une unité ladite valeur en cours et ordonner le maintien en veille des organes (OEij) de l'ensemble de réseau(x) multiplexé(s) si ledit réveil n'est pas confirmé, soit pour mettre à zéro ladite valeur en cours et autoriser le réveil des organes de l'ensemble de réseau(x) multiplexé(s) si ledit réveil est confirmé.

5. Dispositif selon la revendication 4, **caractérisé en ce qu'**il est agencé, en cas de réception par ledit organe de gestion (OM) d'une demande locale de réveil, pour mettre à zéro ladite valeur en cours du compteur et autoriser le réveil des organes de l'ensemble de réseau(x) multiplexé(s).

6. Dispositif selon l'une des revendications 4 ou 5, **caractérisé en ce que** l'ensemble d'au moins un réseau multiplexé (Ri) est choisi parmi un réseau de type CAN, un réseau d'interconnexion locale (LIN), et un réseau de type FlexRay.

7. Organe de gestion (OM) d'un ensemble d'au moins un réseau multiplexé (Ri), **caractérisé en ce qu'**il comprend un dispositif de contrôle (D) selon l'une des revendications 5 ou 6.

## Claims

1. Method of controlling the waking up of components (OEij) of an assembly of at least one multiplexed communication network (Ri) managed by a management member (OM), **characterised in that** it consists, in the case of detection by said management member (OM) of a waking up of the components (OEij) of a multiplexed network (Ri) of the assembly, of determining the current value of a counter and, if this current value is greater than or equal to a chosen threshold, not requesting confirmation of said waking up and ordering a maintenance on standby of the components (OEij) of the set of multiplexed network or networks, while, if this current value is less than said chosen threshold, either incrementing by one unit said current value and ordering the maintenance on standby of the components (OEij) of the said of multiplexed network or networks if said waking up is not confirmed, or setting to zero said current value and enabling the waking up of the components of the set of multiplexed network or networks if said waking up is confirmed.

2. Method according to claim 1, **characterised in that**, in the case of reception by said management member (OM) of a local wake-up request, said current value of the counter is set to zero and the waking up of the components of the set of multiplexed network or networks is enabled.

3. Method according to one of claims 1 or 2, **characterised in that** the set of at least one multiplexed network (Ri) is chosen from a network of the CAN type, a local interconnection network (LIN) and a network of the FlexRay type.

4. Device (D) for controlling the waking up of components (OEij) of a set of at least one multiplexed communication network (Ri) managed by a management member (OM), **characterised in that** it is arranged, in the case of detection by said management member (OM) of a waking up of the components (OEij) of a multiplexed network (Ri) of the set, to determine the current value of a counter and, if this current value is greater than or equal to a chosen threshold, to order a maintenance on standby of the components (OEij) of the set of multiplexed network or networks, while, if this current value is below said chosen threshold, either to increment by one unit said current value and to order the maintenance on standby of the components (OEij) of the set of multiplexed network or networks if said waking up is not confirmed, or to set to zero said current value and to enable the waking up of the components of the set of multiplexed network or networks if said waking up is confirmed.

5. Device according to claim 4, **characterised in that** it is arranged, in the case of reception by said management member (OM) of a local wake-up request, to set to zero said current value of the counter and to enable the waking up of the components of the set of multiplexed network or networks.

6. Device according to one of claims 4 or 5, **characterised in that** the set of at least one multiplexed network (Ri) is chosen from a network of the CAN type, a local interconnection network (LIN) and a network of the FlexRay type.

7. Member (OM) for managing a set of at least one multiplexed network (Ri), **characterised in that** it comprises a control device (D) according to one of claims 5 or 6.

## Patentansprüche

1. Verfahren zur Aufwecksteuerung von Organen (OEij) einer Einheit von zumindest einem Multiplex-Kommunikationsnetz (Ri), das von einem Verwaltungsorgan (OM) verwaltet wird, **dadurch gekennzeichnet, dass** es darin besteht, im Falle des Erfassens eines Erwachens der Organe (OEij) eines Multiplex-Netzwerkes (Ri) der Einheit durch das besagte Verwaltungsorgan (OM) den laufenden Wert eines Zählers zu bestimmen, und darin, dass, wenn dieser laufende Wert größer oder gleich einem gewählten Grenzwert ist, keine Abfrage der Bestätigung des besagten Erwachens erfolgt, und eine Beibehaltung des Stand-by der Organe (OEij) der Einheit des (der) Multiplex-Netzwerke(s) befohlen wird, währenddessen der besagte laufende Wert, wenn dieser laufende Wert kleiner ist, als der gewählte Grenzwert, um eine Einheit zu erhöhen ist, und die Beibehaltung im Stand-by der Organe (OEij) der Einheit des (der) Multiplex-Netzwerke(s) zu befehlen ist, wenn das besagte Erwachen nicht bestätigt wird, oder der besagte laufende Wert abzunullen, und das Erwachen der Organe der Einheit des (der) Multiplex-Netzwerke(s) freizugeben sind, wenn das besagte Erwachen bestätigt wird.

2. Verfahren nach Anspruch 1, **dadurch gekennzeichnet, dass** man den besagten laufenden Wert des Zählers im Falle eines Empfanges eines lokalen Erweckungsbefehls durch das besagte Verwaltungsorgan (OM) abnullt, und man das Erwachen der Organe der Einheit des (der) Multiplex-Netzwerke(s) freigibt.

3. Verfahren nach einem der Ansprüche 1 oder 2, **dadurch gekennzeichnet, dass** die Einheit von zumindest einem Multiplex-Netzwerk (Ri) aus einem Netzwerk in der Art eines CAN-Netzes, einem lokalen Netzwerk (LIN) und einem Netzwerk in der Art eines FlexRay-Netzes ausgewählt wird.

4. Vorrichtung (D) zur Aufwecksteuerung von Organen (OEij) einer Einheit von zumindest einem Multiplex-Kommunikationsnetz (Ri), das von einem Verwaltungsorgan (OM) verwaltet wird, **dadurch gekennzeichnet, dass** sie eingerichtet ist, um im Falle des Erfassens eines Erwachens der Organe (OEij) eines Multiplex-Netzwerkes (Ri) der Einheit durch das besagte Verwaltungsorgan (OM) den laufenden Wert eines Zählers zu bestimmen, und um, wenn dieser laufende Wert größer oder gleich einem gewählten Grenzwert ist, eine Beibehaltung des Stand-by der Organe (OEij) der Einheit des (der) Multiplex-Netzwerke(s) zu befehlen, um jedoch den besagten laufenden Wert, wenn dieser laufende Wert kleiner ist, als der gewählte Grenzwert, entweder um eine Einheit zu erhöhen, und die Beibehaltung im Stand-by der Organe (OEij) der Einheit des (der) Multiplex-Netzwerke(s) zu befehlen, wenn das besagte Erwachen nicht bestätigt wird, oder um den besagten laufenden Wert abzunullen, und das Erwachen der Organe der Einheit des (der) Multiplex-Netzwerke(s) freizugeben, wenn das besagte Erwachen bestätigt wird.

5. Vorrichtung nach Anspruch 4, **dadurch gekennzeichnet, dass** sie eingerichtet ist, um im Falle eines Empfanges eines lokalen Erweckungsbefehls durch das besagte Verwaltungsorgan (OM) den besagten laufenden Wert des Zählers abzunullen, und das Erwachen der Organe der Einheit des (der) Multiplex-Netzwerke(s) freizugeben.

6. Vorrichtung nach einem der Ansprüche 4 oder 5, **dadurch gekennzeichnet, dass** die Einheit von zumindest einem Multiplex-Netzwerk (Ri) aus einem Netzwerk in der Art eines CAN-Netzes, einem lokalen Netzwerk (LIN) und einem Netzwerk in der Art eines FlexRay-Netzes ausgewählt wird.

7. Verwaltungsorgan (OM) einer Einheit von zumindest einem Multiplex-Netzwerk (Ri), **dadurch gekennzeichnet, dass** es eine Steuervorrichtung (D) nach einem der Ansprüche 5 oder 6 umfasst.
